# EUROPÄISCHE PATENTSCHRIFT

(11) **EP 2 117 969 B1**
(45) Veröffentlichungstag und Bekanntmachung des Hinweises auf die Patenterteilung: **11.04.2012**
(21) Anmeldenummer: 08708371.3
(22) Anmeldetag: 29.01.2008
(51) Int. Cl.: B65G 1/137, B65G 1/04

(54) **LAGERREGAL**
STORAGE SHELF
RAYONNAGE DE STOCKAGE

(30) Priorität: 31.01.2007 DE 102007004866
(43) Veröffentlichungstag der Anmeldung: 18.11.2009
(73) Patentinhaber: Hänel & CO., 9450 Altstätten (CH)
(72) Erfinder: JANTON, Peter, 74078 Heilbronn (DE)
(74) Vertreter: Preissner, Nicolaus
(86) Internationale Anmeldenummer: PCT/EP2008/051054
(87) Internationale Veröffentlichungsnummer: WO 2008/092865

(56) Entgegenhaltungen:
- EP-A- 1 038 804
- DE-A1- 3 401 493
- DE-C1- 3 809 520

## Beschreibung

Die vorliegende Erfindung betrifft ein Lagerregal mit einer Vielzahl von übereinander angeordneten Trägerstützen zur Abstützung von Lagergutträgern, die mittels einer automatischen Beschickungs- und Entnahmevorrichtung förderbar sind, mit mindestens einer Beschickungs- und Entnahmeöffnung zur Zuführung und Entnahme der Lagergutträger und mit einer an einer Oberseite der Beschickungs- und Entnahmeöffnung angeordneten Anzeigeeinrichtung zur Anzeige von Lagerorten eines Lagergutes in dem Lagergutträger, wobei die Anzeigeeinrichtung eine Vielzahl von diskreten Leuchtelementen aufweist.

Bei derartigen Lagerregalen, bei denen verschiedenartiges Lagergut eingelagert wird, wird zur Beschickung mit oder Entnahme von Lagergut jeweils ein Lagergutträger in die Beschickungs- und Entnahmeöffnung verfahren. Diese Beschickungs- und Entnahmeöffnung ist dem Bediener zugänglich. Sobald der Lagergutträger in der Beschickungs- und Entnahmeöffnung bereit steht, kann der Bediener neues Lagergut in den Lagergutträger einlegen oder dem Lagergutträger entnehmen.

Moderne Lagerregale der eingangs genannten Art verfügen über eine Steuerung, die der Lagerhaltung dient und in der abgelegt ist, welches Lagergut in welchem Lagergutträger aufbewahrt ist. Dadurch kann durch den Bediener der gesuchte Lagergutträger aufgefunden werden. Zum schnellen und effizienten Auffinden des gewünschten Lagergutes in einem Lagergutträger ist es in dem Stand der Technik bekannt, mittels einer Lichtmarkierung den Lagerort des Lagergutes zu markieren.

Die DE 43 02 711 A1 offenbart zu diesem Zweck eine bewegliche Lichtstrahlführung, mit der Lagergut angezeigt werden kann. Die Lichtstrahlführung kann dabei als Laser ausgeführt werden, dessen Strahl durch einen schwenkbaren Spiegel abgelenkt und auf den gewünschten Ort geführt wird. Weiter ist offenbart, die Lichtstrahlführung durch eine herkömmliche Lichtquelle, deren Licht gebündelt wird, zu realisieren.

Die EP 1 038 804 A1 beschreibt eine Anzeigevorrichtung an einem Lagerregal, dessen Lagergutträger in Lagergutzeilen aufgeteilt sind. Sobald der Lagergutträger in die Beschickungs- und Entnahmeöffnung verfahren ist, wird eine der Lagergutzeilen mittels einer seitlich des Lagergutträgers angeordneten Lichtleiste optisch markiert. Die in der Lichtleiste verwendete Lichtquelle kann insbesondere eine LED sein.

Darüber hinaus lehrt die DE 38 09 520 C1 eine Anzeigeeinrichtung für ein rechnergesteuertes Paternosterlager, bei der mehrere Leuchtelemente über der Beschickungs- und Entnahmeöffnung angeordnet sind, die mögliche Lagerorte in einem in die Beschickungs- und Entnahmeöffnung verfahrenen Lagergutträger markieren können.

Vor diesem Hintergrund ergibt sich die **Aufgabe,** ein Lagerregal der eingangs genannten Art vorzuschlagen, bei dem die Zuverlässigkeit der Anzeige von Lagerorten erhöht ist.

Zur **Lösung** diese Aufgabe wird bei einem Lagerregal der eingangs genannten Art vorgeschlagen, dass die Leuchtelemente derart in einem zweidimensionalen Raster angeordnet sind, dass ein Lichtstrahl der Leuchtelemente im Wesentlichen senkrecht zu einer Lagerfläche des Lagergutträgers ausgerichtet ist.

Das erfindungsgemäße Lagerregal bietet den Vorteil, dass die Abstrahlung der Leuchtelemente aufgrund des im Wesentlichen senkrechten Lichtstrahls nicht durch Lagergut, insbesondere Lagergut von erheblicher Größe, blockiert werden kann. Damit ist eine zuverlässige, verdeckungsfreie Anzeige der Lagerorte möglich.

Ein weiterer Vorteil des erfindungsgemäßen Lagerregals besteht darin, dass es durch den Verzicht auf teure und komplexe Komponenten, wie beispielsweise Laser, Ablenkungseinheiten und Optiken einfach und damit kostengünstig herzustellen ist.

Vorteilhafte Ausgestaltungen sind Gegenstand der Unteransprüche.

In einer vorteilhaften Ausgestaltung sind die Leuchtmittel der Leuchtelemente als Leuchtdioden ausgebildet. Das hat den Vorteil, dass die Anzeigeeinrichtung wartungsfrei betrieben werden kann und gegenüber anderen Lichtquellen, wie beispielsweise Glühlampen, einen wesentlich geringeren Stromverbrauch aufweist.

Vorteilhaft weisen die Leuchtelemente zur Beschränkung des Raumwinkelbereichs des Lichtstrahls einen zylinderförmigen Abschnitt auf. Hierdurch benötigen die Leuchtelemente nur einen geringen Einbauraum, da keine weiteren Einrichtungen zum Bündeln und/oder Ausrichten der Abstrahlung erforderlich sind.

Bei einer vorteilhaften Ausgestaltung weisen die Leuchtmittel einen Linsenabschnitt auf. Dadurch ist es möglich, die Abstrahlung weiter zu bündeln und die Lichtmarke deutlicher sichtbar zu machen.

Weiter können die Leuchtelemente vorteilhaft jeweils wenigstens einen Befestigungsflansch aufweisen, mit dem sie auf kostengünstige und einfache Art und Weise an dem Lagerregal befestigt werden können.

Weiter kann vorteilhaft vorgesehen sein, dass das Lagerregal ein Steuergerät aufweist, das die Leuchtelemente gemäß den Vorgaben eines Bedieners ansteuert.

Besonders vorteilhaft ist es, wenn zur Anforderung von Lagergut eine Bedieneinheit an das Steuergerät angeschlossen ist. Dadurch ist eine effiziente und einfache Handhabung des Lagerregals gewährleistet.

Nachfolgend wird die Erfindung anhand eines Ausführungsbeispiel näher erläutert, das in den Zeichnungen schematisch dargestellt ist. Es zeigen:
- Fig. 1: eine schematische Seitenansicht einer Ausführungsform eines erfindungsgemäßen Lagerregals;
- Fig. 2: eine schematische Frontansicht des Lagerregals gemäß Fig.1;
- Fig. 3: eine Draufsicht auf eine erfindungsgemäße Anzeigeeinrichtung und
- Fig. 4: eine vergrößerte Ansicht eines Leuchtelements mit Leuchtdiode und Montageeinrichtung der Anzeigeeinrichtung gemäß Fig. 3

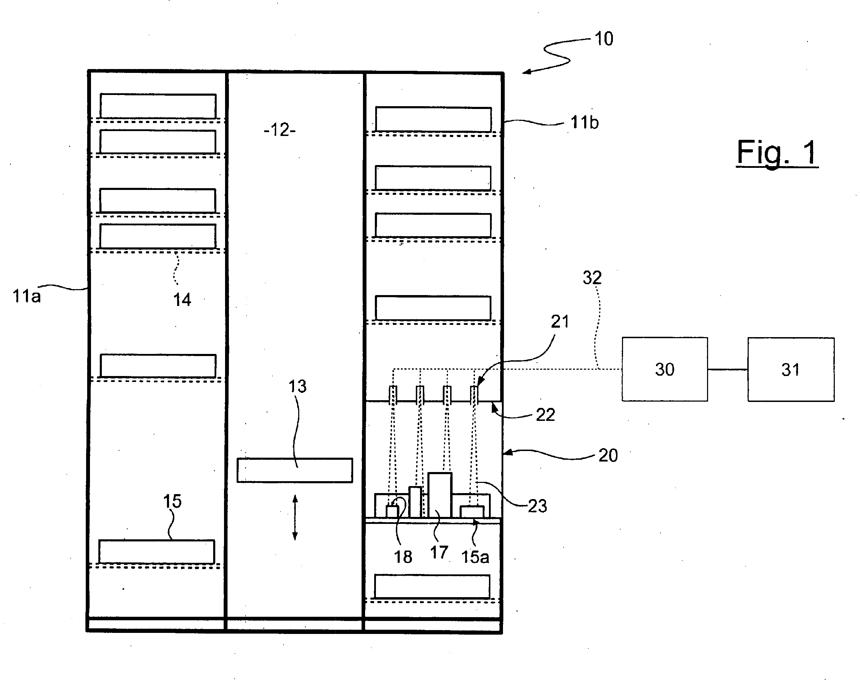

Das in Fig. 1 dargestellte Lagerregal 10 weist zwei mit Abstand zueinander angeordnete Module 11a, 11 b auf. Zwischen den Modulen 11a, 11 b ist ein Förderraum 12 vorgesehen, in dem eine verfahrbare automatische Beschickungs- und Entnahmevorrichtung 13 angeordnet ist, mit der die Lagergutträger 15 förderbar sind.

Die Module 11a, 11 b weisen eine Vielzahl von beabstandeten, paarweise angeordneten Trägerstützen 14 auf, die an gegenüberliegenden Seitenwänden 19a, 19b angeordnet sind. Die Trägerstützen 14 dienen der Abstützung von trogförmig ausgebildeten Lagergutträgern 15, in denen Lagergut 17 aufgenommen wird.

An dem Modul 11 b ist eine Beschickungs- und Entnahmeöffnung 20 vorgesehen, über die die Lagergutträger 15 zugeführt oder entnommen werden können.

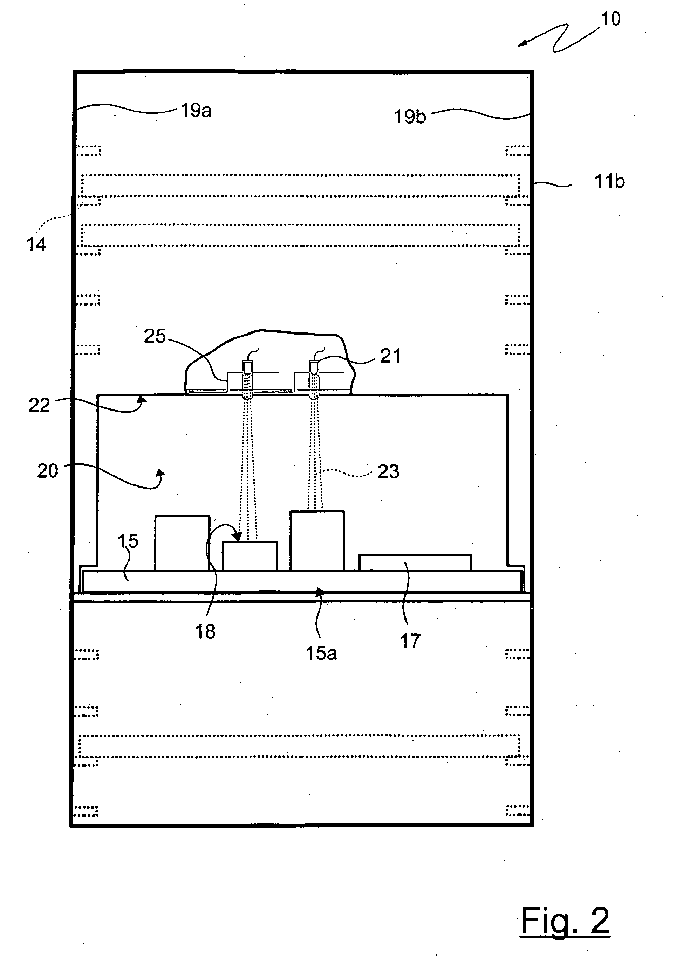

Wie auch aus Fig. 2 zu erkennen ist, ist an oder in der Oberseite 22 der Beschickungs- und Entnahmeöffnung 20 eine Anzeigeeinrichtung 16 angeordnet, die eine Vielzahl von Leuchtelementen 21 aufweist. Ist ein Leuchtelement 21 eingeschaltet, so strahlt es einen Lichtstrahl 23 ab. Der Lichtstrahl 23 ist nach unten auf den Lagergutträger 15, insbesondere auf Lagerorte für das Lagergut 17, gerichtet.

Die Leuchtelemente 21 sind so an oder in der Oberseite 22 angeordnet, dass der von ihnen erzeugte Lichtstrahl 23 im Wesentlichen senkrecht auf den Lagergutträger 15 trifft. Damit wird verhindert, dass ein Lichtstrahl 23, der auf einen Lagerort gerichtet ist, von Lagergut 17, das an einem benachbarten Lagerort eingelagert ist, verdeckt wird.

Durch den Lichtstrahl 23 des Leuchtelements 21 wird auf dem Lagergut 17 eine Lichtmarke 18 erzeugt, die das Lagergut 17 für den Bediener deutlich sichtbar markiert.

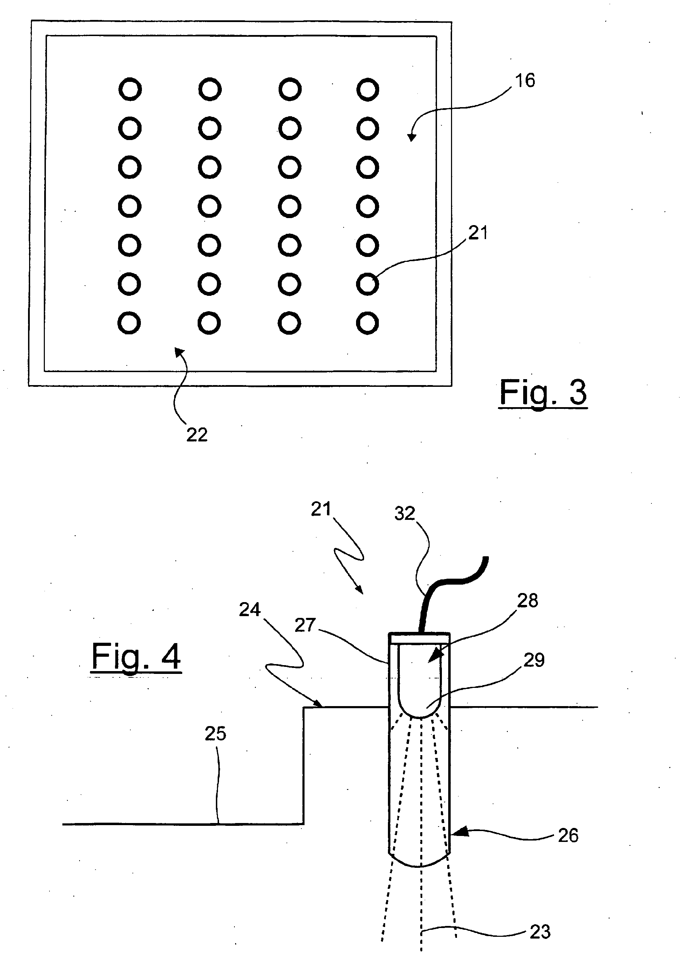

Wie aus Fig. 3 ersichtlich, sind die Leuchtelemente 21 in einem zweidimensionalen Raster angeordnet.

Die Verwendung anderer Raster, die an die Geometrie bestimmten Lagergutes 17 angepasst ist, ist ebenfalls möglich.

Zur Ansteuerung der Leuchtelemente 21 ist ein Steuergerät 30 vorgesehen. An das Steuergerät 30 ist eine Bedieneinheit 31 angeschlossen, mit der ein bestimmtes Lagergut 17 anwählbar ist. Das Steuergerät 30 steuert nach Eingabe des gewünschten Lagerguts 17 die Beschickungs- und Entnahmevorrichtung 13 so an, dass der entsprechende Lagergutträger 15 in die Beschickungs- und Entnahmeöffnung 20 verfahren wird. Sobald der Lagergutträger 15 sich in der Beschickungs- und Entnahmeöffnung 20 befindet, wird dasjenige Leuchtelement 21 angesteuert, das eine Lichtmarke 18 an dem Lagerort des gewünschten Lagergutes 17 erzeugt.

Der Aufbau eines Leuchtelements 21 ist in Fig. 4 zu sehen. Ein Gehäuse 24 weist einen Befestigungsflansch 25 auf, mit dem das Leuchtelement 21 an der Oberseite 22 der Beschickungs- und Entnahmeöffnung 20 befestigt ist. Weiter weist das Gehäuse 24 einen zylindrischen Abschnitt 26 auf, der nach unten hin offen ist. Der Befestigungsflansch 25 und der zylindrische Abschnitt 26 können dabei jeweils aus Metall oder Kunststoff gefertigt sein.

An dem oberen Ende 27 des zylindrischen Abschnitts 26 ist als Leuchtmittel eine Leuchtdiode (LED) 28 angeordnet, deren Hauptabstrahlrichtung nach unten auf das offene Ende des zylindrischen Abschnitts 26 zeigt. Die Leuchtdiode 28 weist dabei einen Linsenabschnitt 29 auf, durch den das von der Leuchtdiode 28 abgestrahlte Licht gebündelt wird. Durch die Länge des zylindrischen Abschnitts 26 wird zusätzlich eine Richtwirkung auf den Lichtstrahl 23 ausgeübt. Damit ist gewährleistet, dass von dem Leuchtelement 21 nur eine lokal begrenzte Fläche des Lagergutträgers 15 beleuchtet wird.

Das Leuchtelement 21 hat an dem oberen Ende 27 des zylindrischen Abschnitts 26 einen Steueranschluss 32, mit dem es mit Strom versorgt und an das Steuergerät 30 angeschlossen wird.

Wie in Fig. 2 gezeigt, wird das Leuchtelement 21 mit einem Befestigungsflansch 25 an der Oberseite 20 der Beschickungs- und Entnahmeöffnung 20 befestigt.

Die Erfindung zeichnet sich insbesondere dadurch aus, dass eine verdeckungsfreie Kennzeichnung von Lagerorten möglich ist und dass die dazu verwendeten Leuchtelemente 21 einfach und kostengünstig herzustellen sind. Weiter sind die Leuchtelemente 21 durch ihren Befestigungsflansch 25 einfach und zuverlässig an der Oberseite 22 der Beschickungs- und Entnahmeöffnung 20 anbringbar. Das vorteilhaft mit der Leuchtdiode 28 ausgestattete Leuchtelement 21 hat darüber hinaus den Vorteil, dass es nur einen geringen Energieverbrauch hat und über die gesamte Lebensdauer des Lagerregals 10 hinweg praktisch wartungsfrei ist.

### Bezugszeichen liste

- 10: Lagerregal
- 11a: Modul
- 11 b: Modul
- 12: Förderraum
- 13: Beschickungs- und Entnahmevorrichtung
- 14: Trägerstützen
- 15: Lagergutträger
- 15a: Lagerfläche
- 16: Anzeigeeinrichtung
- 17: Lagergut
- 18: Lichtmarke
- 19a: Seitenwand
- 19b: Seitenwand

- 20: Beschickungs- und Entnahmeöffnung
- 21: Leuchtelement
- 22: Oberseite
- 23: Abstrahlung (Lichtstrahl)
- 24: Gehäuse
- 25: Befestigungsflansch
- 26: zylindrischer Abschnitt
- 27: oberes Ende
- 28: Leuchtdiode (LED)
- 29: Linsenabschnitt

- 30: Steuergerät
- 31: Bedieneinheit

## Patentansprüche

1. Lagerregal (10) mit einer Vielzahl von übereinander angeordneten Trägerstützen (14) zur Abstützung von Lagergutträgern (15), die mittels einer automatischen Beschickungs- und Entnahmevorrichtung (13) förderbar sind, mit mindestens einer Beschickungs- und Entnahmeöffnung (20) zur Zuführung und Entnahme der Lagergutträger (15) und mit einer an einer Oberseite (22) der Beschickungs- und Entnahmeöffnung (20) angeordneten Anzeigeeinrichtung (16) zur Anzeige von Lagerorten eines Lagergutes (17) in dem Lagergutträger (15), wobei die Anzeigeeinrichtung (16) eine Vielzahl von diskreten Leuchtelementen (21) aufweist, **dadurch gekennzeichnet, dass** die Leuchtelemente (21) derart in einem zweidimensionalen Raster angeordnet sind, dass ein Lichtstrahl (23) der Leuchtelemente (21) im Wesentlichen senkrecht zu einer Lagerfläche (15a) des Lagergutträgers (15) ausgerichtet ist.

2. Lagerregal (10) nach Anspruch 2, **dadurch gekennzeichnet, dass** die Leuchtelemente (21) als Leuchtdioden (28) ausgebildet sind.

3. Lagerregal (10) nach einem der voranstehenden Ansprüche, **dadurch gekennzeichnet, dass** das Leuchtelement (21) zur Beschränkung des Raumwinkelbereichs des Lichtstrahls (23) einen zylindrischen Abschnitt (26) aufweist.

4. Lagerregal (10) nach einem der voranstehenden Ansprüche, **dadurch gekennzeichnet, dass** das Leuchtelement (21) zur Bündelung des Lichtstrahls (23) einen Linsenabschnitt (29) aufweist.

5. Lagerregal (10) nach einem der voranstehenden Ansprüche, **dadurch gekennzeichnet, dass** das Leuchtelement (21) einen Befestigungsflansch (25) aufweist.

6. Lagerregal (10) nach einem der voranstehenden Ansprüche, **dadurch gekennzeichnet, dass** ein Steuergerät (30) vorgesehen ist, das die Leuchtelemente (21) ansteuert.

7. Lagerregal (10) nach Anspruch 6, **dadurch gekennzeichnet, dass** eine Bedieneinheit (31) zur Anforderung eines Lagergutes (17) von dem Lagerregal (10) vorgesehen ist.

## Claims

1. Storage rack (10) having a plurality of supporting brackets (14) which are arranged one above the other for supporting stored product carriers (15) which are conveyable by means of an automatic loading and unloading apparatus (13), having at least one loading and unloading opening (20) for supplying and removing the stored product carriers (15) and having an indicating device (16) which is arranged on a top surface (22) of the loading and unloading opening (20) for indicating storage locations of a stored product (17) in the stored product carrier (15), wherein the vindicating device (16) has a plurality of discrete light-emitting elements (21), **characterized in that** the light-emitting elements (21) are arranged in such a manner in a two-dimensional grid that a light beam (23) of the light-emitting elements (21) is aligned substantially at a right angle to a supporting surface (15a) of the stored product carrier (15).

2. Storage rack (10) according to Claim 2, **characterized in that** the light-emitting elements (21) are realized as light-emitting diodes (28).

3. Storage rack (10) according to one of the preceding claims, **characterized in that** the light-emitting element (21) has a cylindrical section (26) for restricting the solid angle field of the light beam (23).

4. Storage rack (10) according to one of the preceding claims, **characterized in that** the light-emitting element (21) has a lens section (29) for focussing the light beam (23).

5. Storage rack (10) according to one of the preceding claims, **characterized in that** the light-emitting element (21) has a mounting flange (25).

6. Storage rack (10) according to one of the preceding claims, **characterized in that** a control device (30) which activates the light-emitting elements (21) is provided.

7. Storage rack (10) according to Claim 6, **characterized in that** an operating unit (31) for requesting a stored product (17) from the storage rack (10) is provided.

## Revendications

1. Rayonnage de stockage (10) comprenant une pluralité de soutiens porteurs (14) agencés les uns au-dessus des autres pour soutenir des éléments porteurs (15) de produits à stocker, qui peuvent être convoyés au moyen d'un dispositif de chargement et de prélèvement automatique (13), présentant au moins une ouverture de chargement et de prélèvement (20) pour l'amenée et le prélèvement des éléments porteurs (15), et comprenant un dispositif indicateur (16), agencé sur une face supérieure (22) de l'ouverture de chargement et de prélèvement (20) pour indiquer des emplacements de stockage d'un produit à stocker (17) dans l'élément porteur (15), dans lequel le dispositif indicateur (16) comprend une pluralité d'éléments lumineux discrets (21), **caractérisé en ce que** les éléments lumineux (21) sont agencés dans une trame bidimensionnelle de telle façon qu'un rayon de lumière (23) des éléments lumineux (21) est orienté sensiblement perpendiculairement à une surface de stockage (15a) de l'élément porteur (15).

2. Rayonnage de stockage (10) selon la revendication 2, **caractérisé en ce que** les éléments lumineux (21) sont réalisés sous forme de diodes électroluminescentes (28).

3. Rayonnage de stockage (10) selon l'une des revendications précédentes, **caractérisé en ce que** l'élément lumineux (21) comprend un tronçon cylindrique (26) pour limiter la plage angulaire dans l'espace du rayon de lumière (23).

4. Rayonnage de stockage (10) selon l'une des revendications précédentes, **caractérisé en ce que** l'élément lumineux (21) comprend un tronçon à lentille (29) pour focaliser le rayon de lumière (23).

5. Rayonnage de stockage (10) selon l'une des revendications précédentes, **caractérisé en ce que** l'élément lumineux (21) comprend une bride de fixation (25).

6. Rayonnage de stockage (10) selon l'une des revendications précédentes, **caractérisé en ce qu'**il est prévu un appareil de commande (30) qui pilote les éléments lumineux (21).

7. Rayonnage de stockage (10) selon la revendication 6, **caractérisé en ce qu'**il est prévu une unité de service (31) pour l'appel d'un produit stocké (17) depuis le rayonnage de stockage (10).
